# EUROPÄISCHE PATENTSCHRIFT

(11) **EP 1 231 559 B1**
(45) Veröffentlichungstag und Bekanntmachung des Hinweises auf die Patenterteilung: **26.11.2003**
(21) Anmeldenummer: 01103027.7
(22) Anmeldetag: 09.02.2001
(51) Int. Cl.: G06K 13/08

(54) **Kartenleser**
Card reader
Lecteur de cartes

(43) Veröffentlichungstag der Anmeldung: 14.08.2002
(73) Patentinhaber: ddm hopt + schuler GmbH & Co. KG, D-78628 Rottweil (DE)
(72) Erfinder: Hopt, Karl-Rudolf, 78628 Rottweil (DE); Hopt, Jürgen, 78628 Rottweil (DE); Franzmann, Mike, 78628 Hausen (DE); Storz, Michael, 78467 Konstanz (DE)
(74) Vertreter: KOHLER SCHMID + PARTNER

(56) Entgegenhaltungen:
- US-A- 5 286 957
- US-A- 5 508 501

## Beschreibung

Die Erfindung betrifft einen Kartenleser mit einem Kartenanschlag für eine in den Kartenleser eingeführte Karte.

Bei sogenannten Push/Pull-Kartenlesern wird eine Karte durch den Benutzer bis zur Anlage an einen Kartenanschlag in ihre Datenaustauschposition in den Kartenleser eingeschoben und nach dem Datenaustausch wieder aus dem Kartenleser herausgezogen. Die Länge von Karten, die einen integrierten Schaltkreis (Chipkarten) oder einen Magnetstreifen (Magnetkarten) tragen, ist genormt, und daher sind Kartenleser nur für diese "normierte" Kartenlänge ausgelegt. Eine kürzere Karte, die aus Vandalismus oder zu Manipulationszwecken in den Kartenleser eingeführt wird, bleibt im Kartenleser stecken, wodurch das Einschieben einer weiteren Karte blockiert bzw. deren Datenaustausch beeinträchtigt wird.

Aus der US-A-5,286,957 ist ein Kartenleser mit einem aus der Kartenbahn herausdrehbarem Kartenanschlag bekannt, an dem die eingeführte Karte mit ihrer Vorderkante in der Datenaustauschposition anliegt. Der Kartenanschlag ist an einem Schwenkarm um eine in der Kartenebene liegende Schwenkachse aus der Kartenbahn auslenkbar gelagert, wobei die Anschlagfläche des Kartenanschlags als Schrägfläche ausgebildet ist. Wenn eine Karte mit überhoher Kraft in den Kartenleser eingeführt wird, wird der Kartenanschlag aufgrund seiner Schrägfläche aus der Kartenbahn ausgelenkt und die Karte am Kartenanschlag vorbei aus dem Kartenleser herausgeführt. Auf dieser Weise können in den Kartenleser eingeführte Fremdkörper durch eine eingeführte Karte aus dem Kartenleser herausgeschoben und so das Blockieren des Kartenlesers durch den Fremdkörper verhindert werden.

Aus der US-A-5,508,501 ist ebenfalls ein Kartenleser mit einem Kartenanschlag bekannt, der durch eine eingeführte Karte in Einführrichtung mitgenommen wird. Durch die Mitnahmebewegung schwenkt das den Kontakten des Kartenlesers gegenüberliegende Bodenteil des Kartenschachtes zur Ausbildung des Kartenschachts hoch, so dass die Karte gegen die Kontakte gepresst wird. In den Kartenleser eingeführte, zu kurze Karten fallen durch eine Bodenöffnung im Kartenschacht, bevor sie den Kartenanschlag erreichen.

Es ist daher die Aufgabe der Erfindung, eine alternative Lösung vorzuschlagen, um das Blockieren des Kartenlesers durch eine zu kurze Karte wirkungsvoll zu verhindern.

Diese Aufgabe wird erfindungsgemäß dadurch gelöst, dass der Kartenanschlag um eine quer zur Kartenbahn verlaufende Drehachse aus der Kartenbahn herausdrehbar und mit einem um eine quer zur Kartenbahn verlaufende Drehachse auslenkbaren Arm drehgekoppelt ist, der in Karteneinführrichtung hinter dem Kartenanschlag angeordnet ist, wobei bei noch nicht in den Kartenleser eingeführter Karte der Arm und der Kartenanschlag in die Kartenbahn eingreifen und wobei durch das Einführen einer Karte der Arm gegen die Wirkung einer Rückstellkraft aus der Kartenbahn herausgelenkt und dadurch auch der Kartenanschlag aus der Kartenbahn herausgedreht wird.

Der mit der Erfindung erzielte Vorteil besteht darin, dass eine im Kartenleser steckende zu kurze Karte durch die eingeschobene Karte weiter und am herausgedrehten, d.h. wirkungslosen Kartenanschlag vorbei aus dem Kartenleser herausgeschoben wird. Der Kartenanschlag wird erst wieder wirksam, wenn der ausgelenkte Arm wieder in die Kartenbahn eingreifen kann. Der Abstand zwischen Kartenanschlag und dem in die Kartenbahn vorgespannten Arm entspricht der normierten Kartenlänge, so daß der Kartenanschlag für eine Karte mit der normierten Kartenlänge, sobald sie eine zu kurze Karte vor sich aus dem Kartenleser geschoben hat, wieder wirksam wird. Somit ist gesichert, daß durch die halbe Karte der Kartenleser nicht blockiert bzw. beschädigt wird.

Bei besonders bevorzugten Ausführungsformen der Erfindung ist der auslenkbare Arm durch den ersten Arm eines doppelarmigen Hebels gebildet, dessen zweiter Arm mit dem Kartenanschlag drehgekoppelt ist. Dabei kann der zweite Arm des doppelarmigen Hebels am Kartenanschlag in radialem Abstand zu dessen Drehachse angelenkt sein.

Bei besonders bevorzugten Ausführungsformen der Erfindung ist der Kartenanschlag durch einen Bolzen mit einer in der Kartenebene vorgesehenen Aussparung gebildet. Beispielsweise können der Bolzen rund, insbesondere kreisrund, und die Aussparung segmentförmig, insbesondere kreissegment- oder halbkreisförmig, ausgebildet sein.

Vorzugsweise weist der auslenkbare Arm eine in und/oder entgegen der Karteneinführrichtung schräg zur Mitte der Kartenbahn verlaufende Auflaufschräge auf, auf die eine eingeschobene Karte aufläuft und so den Arm aus der Kartenbahn auslenkt. Da die abgerundeten Ecken von normierten Karten aufgrund ihrer Krümmung bereits eine Auflaufschräge bilden, ist eine solche Auflaufschräge am auslenkbaren Arm aber nicht zwingend erforderlich. Bevorzugt ist die Auflaufschräge an einer in die Kartenbahn eingreifenden Nase des auslenkbaren Arms vorgesehen.

Um eine im Kartenleser steckende Karte und eine neu eingeschobene Karte sicher voneinander zu trennen, weist der Kartenanschlag auf seiner in die Kartenbahn einschwenkenden Seite eine Trennkante auf. Mit dieser Trennkante beginnt der Kartenanschlag zwischen beiden Karten in die Kartenbahn einzugreifen, wenn der ausgelenkte Arm die neu eingeführte Karte am Ende der Einführbewegung zu hintergreifen beginnt.

Vorzugsweise ist der auslenkbare Arm in seine in die Kartenbahn eingreifende Schwenkstellung durch eine anderenends am Gehäuse des Kartenlesers angreifende Zugfeder vorgespannt.

Um die Karte für die Dauer des Datenaustausches im Kartenleser zu halten, kann der die Karte hintergreifende Arm als Verriegelung genutzt werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: eine perspektivische Ansicht der Oberseite eines erfindungsgemäßen Kartenlesers mit einem Kartenanschlag für eine in den Kartenleser eingeführte Karte;
- Fig. 2: schematisch verschiedene Stellungen des Kartenanschlags des erfindungsgemäßen Kartenlesers bei noch nicht eingeführter Karte (Fig. 2a), bei teilweise eingeführter Karte (Fig. 2b) und bei vollständig eingeführter Karte (Fig. 2c); und
- Fig. 3: schematisch verschiedene Stellungen des Kartenanschlags des erfindungsgemäßen Kartenlesers bei noch nicht eingeführter Karte (Fig. 3a), bei teilweise eingeführter Karte (Fig. 3b) und bei fast vollständig eingeführter Karte (Fig. 3c), wenn in den Kartenleser zuvor bereits eine halbe Karte eingeführt worden ist.

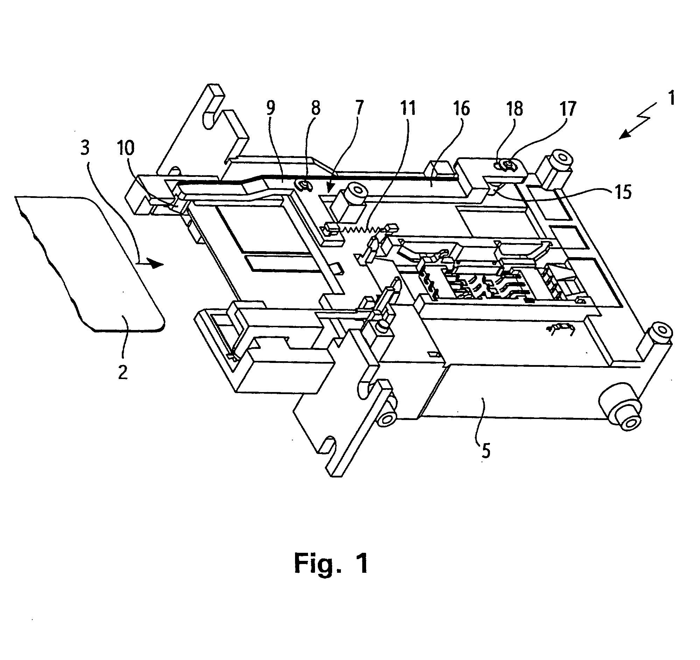

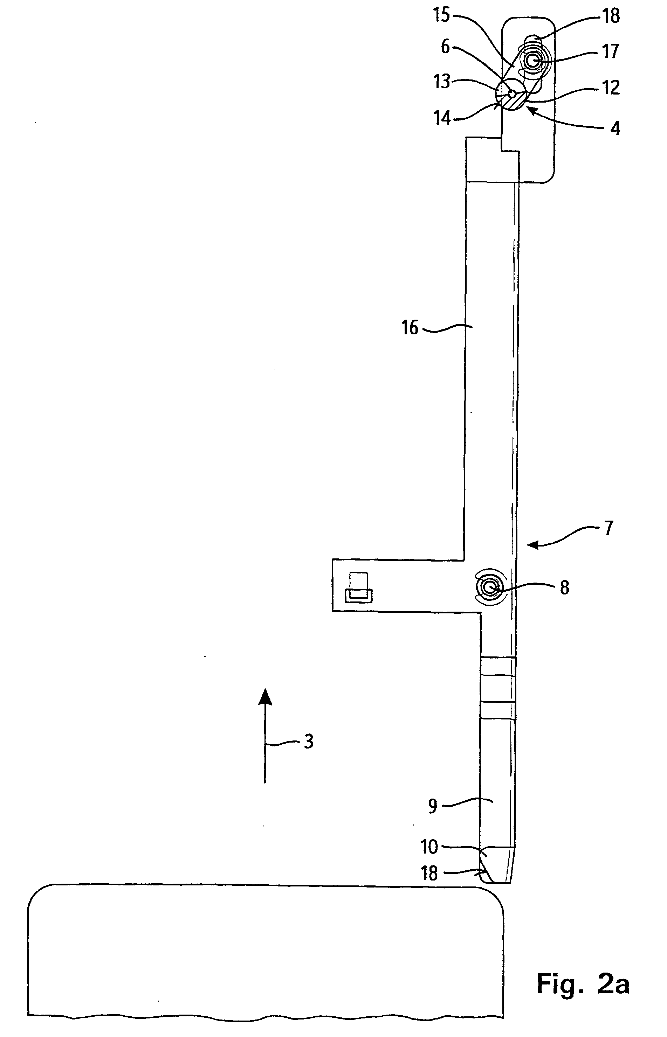

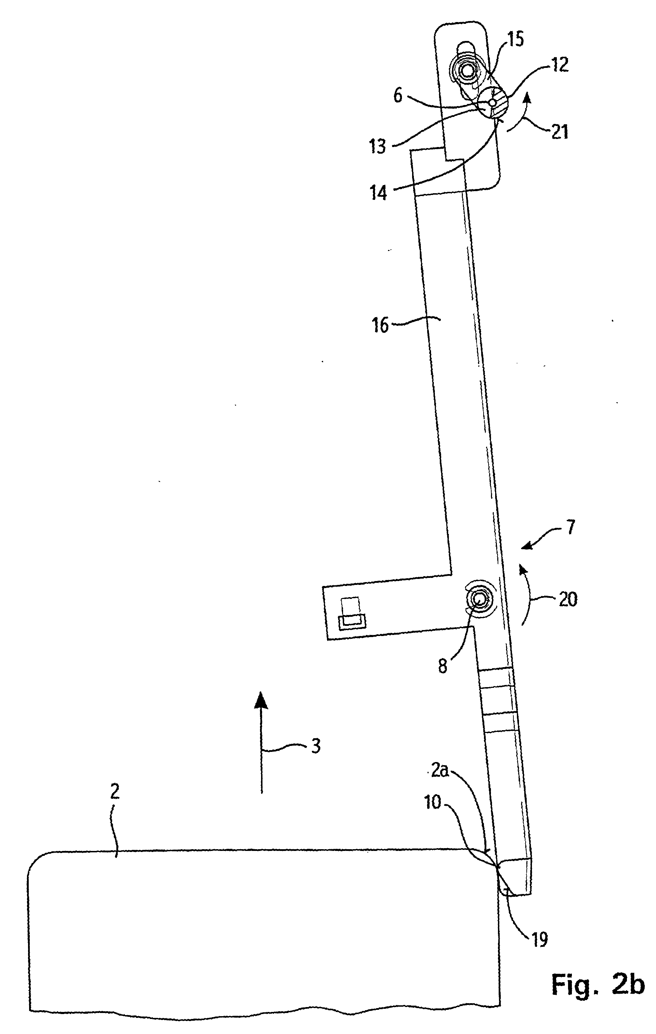

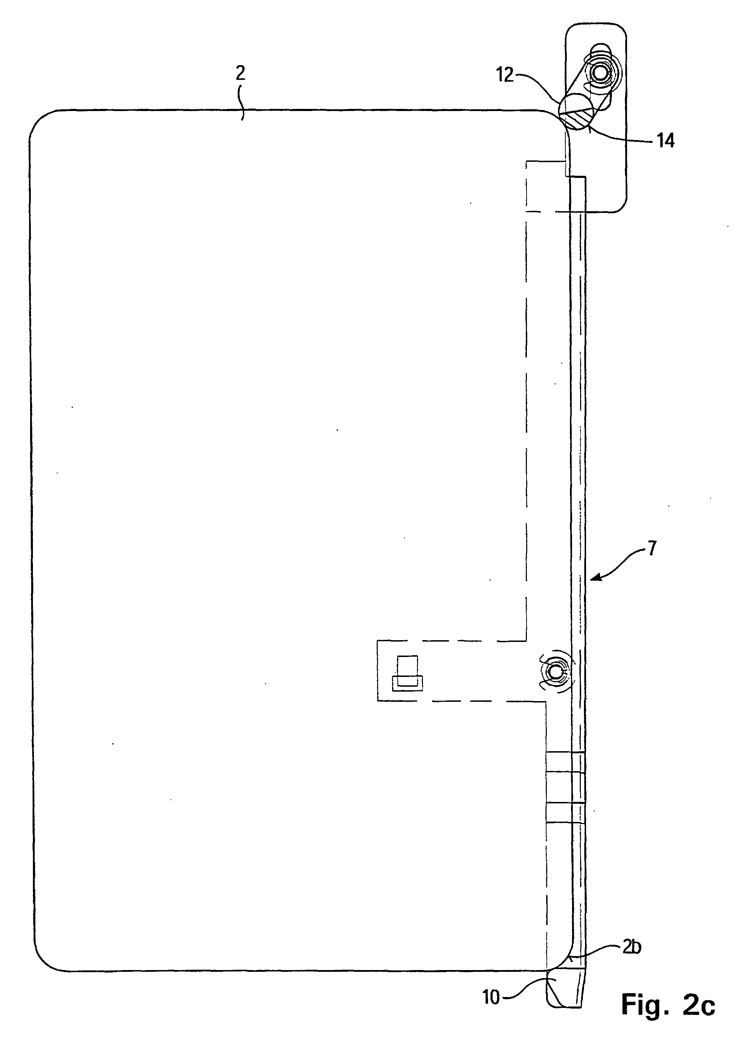

In Fig. 1 ist mit 1 ein sogenannter Push/Pull-Kartenleser bezeichnet, bei dem eine Karte 2 durch den Benutzer in Einführrichtung 3 bis zur Anlage an einen Kartenanschlag 4 (Fig. 2) in ihre Datenaustauschposition in den Kartenleser 1 eingeschoben und nach dem Datenaustausch vom Benutzer wieder aus dem Kartenleser 1 herausgezogen wird.

Der Kartenanschlag 4 ist im Kartenlesergehäuse 5 um eine rechtwinklig zur Kartenbahn verlaufende Drehachse 6 (Fig. 2) aus der Kartenbahn herausdrehbar, wobei diese Drehbewegung des Kartenanschlags 4 mittels eines doppelarmigen Hebels 7 gesteuert wird. Der doppelarmige Hebel 7 ist seitlich der Kartenbahn im Gehäuse 5 um eine rechtwinklig zur Kartenbahn verlaufende Drehachse 8 schwenkbar gelagert und weist an seinem in Einführrichtung 3 hinteren Arm 9 eine Nase 10 auf, die bei nicht in den Kartenleser 1 eingeschobener Karte 2 in die Kartenbahn eingreift. In diese in die Kartenbahn eingreifende Ausgangsstellung ist der doppelarmige Hebel 7 durch eine anderenends am Gehäuse 5 abgestützte Zugfeder 11 vorgespannt.

Wie in **Fig. 2** gezeigt, ist der Kartenanschlag 4 im gezeigten Ausführungsbeispiel durch einen runden Bolzen **12** gebildet, der in der Kartenebene eine halbkreisförmige Aussparung **13** aufweist. Die in der Kartenebene halbzylinderförmige Außenumfangsfläche **14** des Bolzens 12 bildet die Anschlagfläche für die Karte. Je nach Drehstellung des Bolzens 12 liegt daher entweder die Außenumfangsfläche 14 oder die Aussparung 13 in der Kartenbahn. Am Bolzen 12 steht radial ein Arm **15** ab, der an dem in Karteneinführrichtung 3 vorderen Arm **16** des doppelarmigen Hebels 7 angelenkt ist. Dazu ist am freien Ende des radial abstehenden Arms 15 ein Lagerzapfen **17** vorgesehenen, der in einem Langloch **18** des vorderen Arms **16** drehbar und längsverschiebbar gelagert ist.

In den Fig. 2a bis 2c ist die Funktionsweise des Kartenlesers 1 beim Einführen einer Karte 2 dargestellt.

Bei noch nicht in den Kartenleser 1 eingeschobener Karte 2 greifen der doppelarmige Hebel 7 mit seiner Nase 10 und der Bolzen 12 mit seiner halbzylinderförmigen Außenumfangsfläche 14 in die Kartenbahn ein (**Fig. 2a**). Beim Einführen der Karte 2 in Einführrichtung 3 läuft die Karte 2 mit ihrer einen abgerundeten vorderen Ecke **2a** auf die Nase 10 bzw. auf eine in Einführrichtung 3 schräg zur Mitte der Kartenbahn verlaufende Auflaufschräge 19 der Nase 10 auf. Dadurch wird der doppelarmige Hebel 7 gegen die Federkraft der Zugfeder 11 um die Drehachse 8 in Pfeilrichtung **20** ausgelenkt und über den am vorderen Arm 16 angelenkten radial abstehenden Arm 15 auch der Bolzen 12 um die Drehachse 6 um etwa 90° in gleicher Drehrichtung (Pfeilrichtung **21**) gedreht (**Fig. 2b**). In dieser Drehstellung des Bolzens 12 liegt die Aussparung 13 in der Kartenbahn, so daß die Außenumfangsfläche 14 vollständig aus der Kartenbahn herausgedreht ist. Der doppelarmige Hebel 7 bleibt durch die Karte 2 solange ausgelenkt, bis beim weiteren Einschieben, angetrieben von der Zugfeder 11, der doppelarmige Hebel 7 mit seiner Nase 10 die Karte 2 im Bereich ihrer hinteren abgerundeten Ecke **2b** entgegen der Pfeilrichtung 20 zu hinterschwenken beginnt. Gleichzeitig beginnt sich dann auch der Bolzen 12 mit seiner halbzylinderförmigen Außenumfangsfläche 14 in die Kartenbahn hineinzudrehen. Wenn der doppelarmige Hebel 7 mit seiner Nase 10 die Karte 2 in Einführrichtung 3 schließlich vollständig hintergreift, ist auch die halbzylinderförmige Außenumfangsfläche 14 vollständig in die Kartenbahn hineingedreht. In dieser in **Fig. 2c** gezeigten Endstellung liegt die Karte 2 an der halbzylinderförmigen Außenumfangsfläche 14 an und kann nun nicht mehr weitergeschoben werden. Das Herausziehen der Karte 2 ist dagegen problemlos möglich, da die Nase 10 durch das hintere Kartenende bzw. die hintere abgerundete Ecke 2b aus der Kartenbahn ausgelenkt wird.

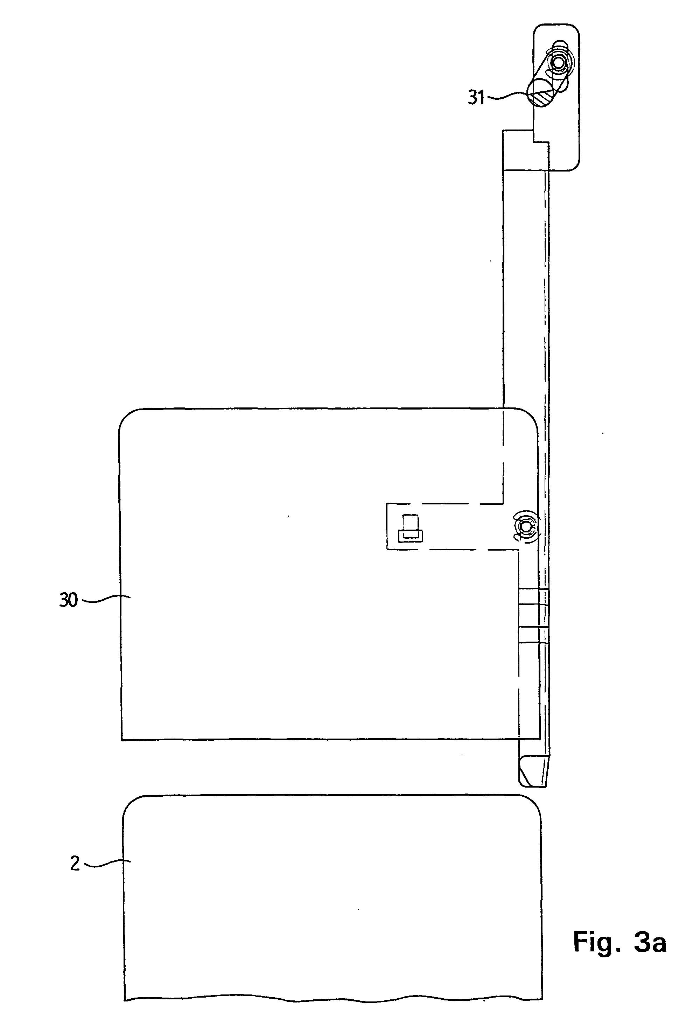

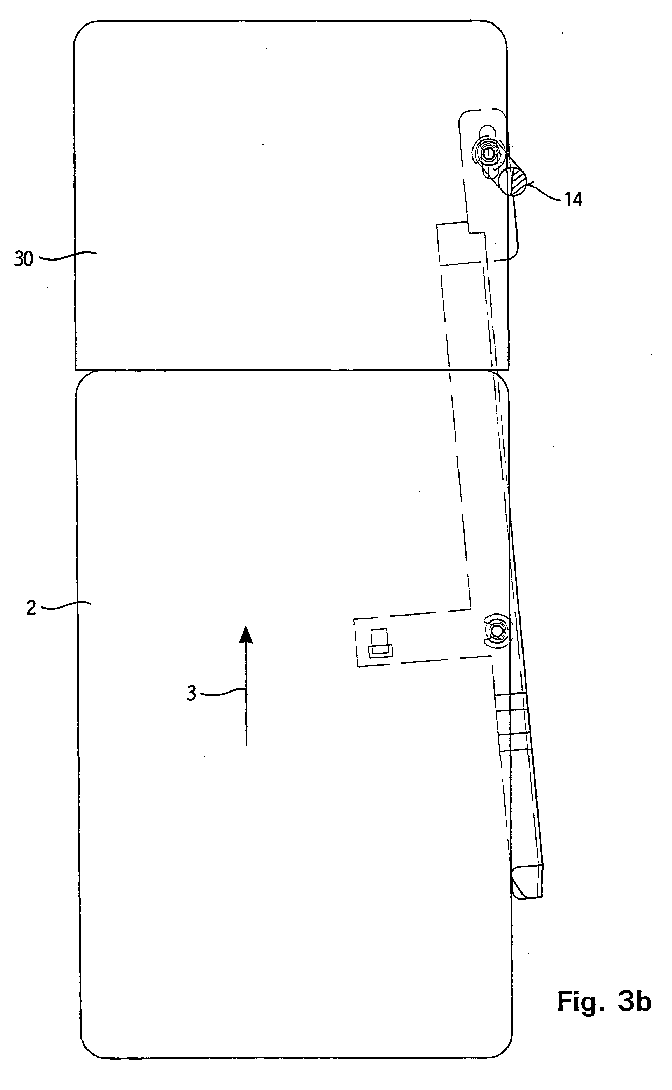

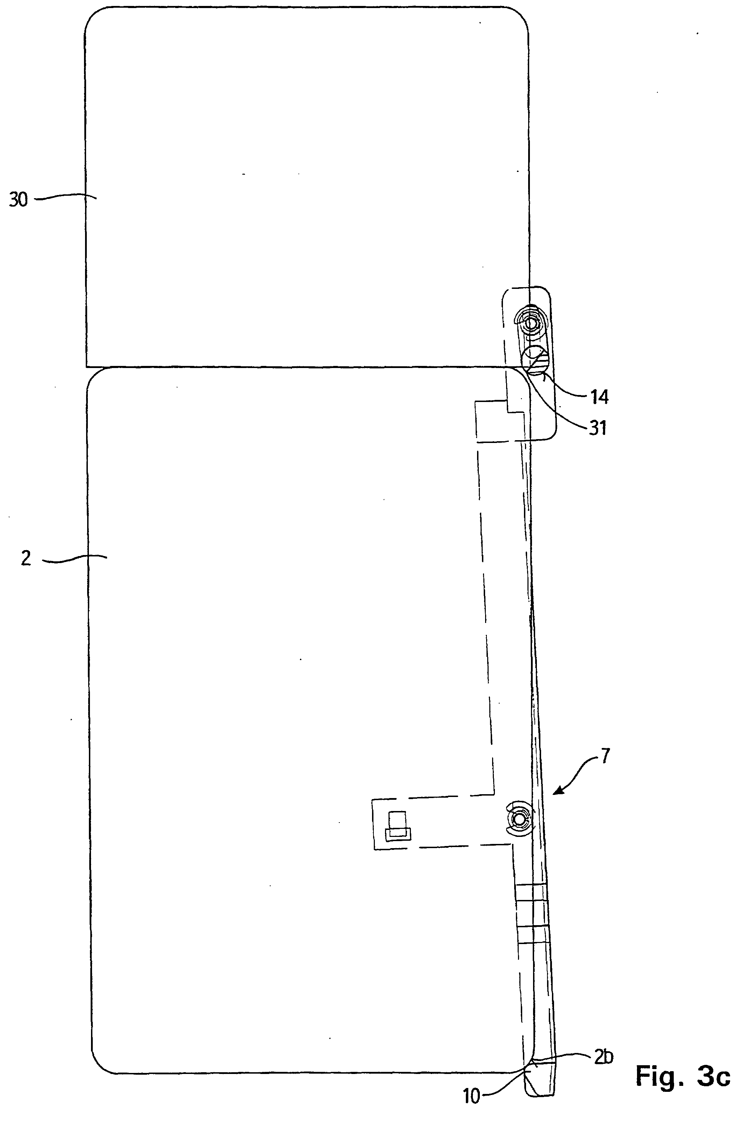

**Fig. 3** zeigt die Funktionsweise des Kartenlesers 1 beim Einführen einer Karte 2, wenn in den Kartenleser 1 zuvor bereits eine halbe Karte 30 eingeschoben worden ist (**Fig. 3a**). Durch Einschieben einer normalen Karte 2 wird, wie oben beschrieben, die halbzylinderförmige Außenumfangsfläche 14 aus der Kartenbahn herausgedreht, und die Karte 2 schiebt die halbe Karte 30 in Einführrichtung 3 vor sich her und an der herausgedrehten halbzylinderförmigen Außenumfangsfläche 14 vorbei (**Fig. 3b**), bis die halbe Karte 30 hinten aus dem Kartenleser 1 fällt. Somit ist gesichert, daß durch die halbe Karte 30 der Kartenleser 1 nicht blockiert bzw. beschädigt wird. Die halbzylinderförmige Außenumfangsfläche 14 beginnt sich erst wieder zwischen den beiden Karten 2, 30 in die Kartenbahn hineinzudrehen, wenn der doppelarmige Hebel 7 mit seiner Nase 10 die Karte 2 im Bereich ihrer hinteren abgerundeten Ecke 2b zu hinterschwenken beginnt (Fig. 3c). Um dabei die beiden aneinander anstoßenden Karten 2, 30 sicher zu trennen, hat der Kartenanschlag 4 auf seiner in die Kartenbahn einschwenkenden Seite eine Trennkante 31. Mit dieser Trennkante 31 beginnt der Kartenanschlag 4 zwischen beiden Karten 2, 30 in die Kartenbahn einzugreifen, wenn der hintere Arm 9 die eingeführte Karte 2 zu hintergreifen beginnt.

Der Abstand zwischen dem Kartenanschlag 4 und dem in die Kartenbahn eingreifenden hinteren Arm 9 entspricht der normierten Kartenlänge, so daß der Kartenanschlag 4 für eine Karte 2 mit der normierten Kartenlänge, sobald sie eine zu kurze Karte vor sich aus dem Kartenleser geschoben hat, wieder wirksam ist.

## Patentansprüche

1. Kartenleser (1) mit einem Kartenanschlag (4) für eine in den Kartenleser (1) eingeführte Karte (2),
**dadurch gekennzeichnet,**
**daß** der Kartenanschlag (4) um eine quer zur Kartenbahn verlaufende Drehachse (6) aus der Kartenbahn herausdrehbar und mit einem um eine quer zur Kartenbahn verlaufende Drehachse (8) auslenkbaren Arm (9) drehgekoppelt ist, der in Karteneinführrichtung (3) hinter dem Kartenanschlag (4) angeordnet ist, wobei bei noch nicht in den Kartenleser (1) eingeführter Karte (2) der Arm (9) und der Kartenanschlag (4) in die Kartenbahn eingreifen und wobei durch das Einführen einer Karte (2) der Arm (9) gegen die Wirkung einer Rückstellkraft aus der Kartenbahn herausgelenkt und dadurch auch der Kartenanschlag (4) aus der Kartenbahn herausgedreht wird.

2. Kartenleser nach Anspruch 1, **dadurch gekennzeichnet, daß** der auslenkbare Arm (9) durch den ersten Arm eines doppelarmigen Hebels (7) gebildet ist, dessen zweiter Arm (16) mit dem Kartenanschlag (4) drehgekoppelt ist.

3. Kartenleser nach Anspruch 2, **dadurch gekennzeichnet, daß** der zweite Arm (16) des doppelarmigen Hebels (7) am Kartenanschlag (4) in radialem Abstand zu dessen Drehachse (6) angelenkt ist.

4. Kartenleser nach einem der vorhergehenden Ansprüche, **dadurch gekennzeichnet, daß** der Kartenanschlag (4) als Bolzen (12) mit einer in der Kartenebene vorgesehenen Aussparung (13) ausgebildet ist.

5. Kartenleser nach Anspruch 4, **dadurch gekennzeichnet, daß** der Bolzen (12) rund, insbesondere kreisrund, und die Aussparung (13) segmentförmig, insbesondere kreissegment- oder halbkreisförmig, ausgebildet sind.

6. Kartenleser nach einem der vorhergehenden Ansprüche, **dadurch gekennzeichnet, daß** der auslenkbare Arm (9) eine in und/oder entgegen der Karteneinführrichtung (3) schräg zur Mitte der Kartenbahn verlaufende Auflaufschräge (18) aufweist.

7. Kartenleser nach einem der vorhergehenden Ansprüche, **dadurch gekennzeichnet, daß** der auslenkbare Arm (9) mit einer Nase (10) in die Kartenbahn eingreift.

8. Kartenleser nach einem der vorhergehenden Ansprüche, **dadurch gekennzeichnet, daß** der Kartenanschlag (4) auf seiner in die Kartenbahn einschwenkenden Seite eine Trennkante (31) aufweist.

9. Kartenleser nach einem der vorhergehenden Ansprüche, **dadurch gekennzeichnet, daß** der auslenkbare Arm (9) in seine in die Kartenbahn eingreifende Schwenkstellung durch eine anderenends am Gehäuse (5) des Kartenlesers (1) angreifende Zugfeder (11) vorgespannt ist.

## Claims

1. Card reader (1) comprising a card stop (4) for a card (2) inserted into the card reader (1),
**characterized in that** the card stop (4) is rotatable out of the card path about an axis of rotation (6) extending transverse to the card path, and is rotatably coupled to an arm (9) which is deflectable about an axis of rotation (8) extending transverse to the card path, and which is disposed, in the card inserting direction (3), behind the card stop (4), wherein when the card (2) is not yet inserted into the card reader (1 ), the arm (9) and the card stop (4) engage in the card path and wherein the arm (9) is deflected out of the card path by the insertion of a card (2) against the action of a restoring force thereby pivoting also the card stop (4) out of the card path.

2. Card reader according to claim 1, **characterized in that** the deflectable arm (9) is formed by the first arm of a two-armed lever (7) whose second arm (16) is rotatably coupled to the card stop (4).

3. Card reader according to claim 2, **characterized in that** the second arm (16) of the two-armed lever (7) is hinged to the card stop (4) at a radial distance from its axis of rotation (6).

4. Card reader according to any one of the preceding claims, **characterized in that** the card stop (4) is formed as bolt (12) having a recess (13) in the card plane.

5. Card reader according to claim 4, **characterized in that** the bolt (12) is round, in particular circular, and the recess (13) has the shape of a segment, in particular of a segment of a circle or a semi-circle.

6. Card reader according to any one of the preceding claims, **characterized in that** the deflectable arm (9) comprises a rising slope (18) extending in and/or against the card inserting direction (3) at an angle to the center of the card path.

7. Card reader according to any one of the preceding claims, **characterized in that** a nose (10) of the deflectable arm (9) engages the card path.

8. Card reader according to any one of the preceding claims, **characterized in that** the card stop (4) comprises a separating edge (31 ) on its side pivoting into the card path.

9. Card reader according to any one of the preceding claims, **characterized in that** the deflectable arm (9) is pretensioned into its pivoting position engaging in the card path by a tension spring (11) whose other end engages on the housing (5) of the card reader (1 ).

## Revendications

1. Lecteur de cartes (1) avec une butée de carte (4) pour une carte (2) introduite dans le lecteur de cartes (1), **caractérisé en ce que** la butée de carte (4) peut être sortie hors de la trajectoire de la carte, par rotation autour d'un axe de rotation (6) qui s'étend perpendiculairement à la trajectoire de la carte, et est accouplée mobile en rotation à un bras (9) déployable autour d'un axe de rotation (8) qui s'étend perpendiculairement à la trajectoire de la carte et qui est agencé dans la direction d'introduction de la carte (3) derrière la butée de carte (4), le bras (9) et la butée de carte (4) s'engageant dans la trajectoire de la carte lorsque la carte (2) n'est pas encore introduite dans le lecteur de carte (1) et le bras (9) étant dévié hors de la trajectoire de la carte à l'encontre d'une force de rappel par l'introduction d'une carte (2), ce qui fait aussi sortir par rotation la butée de carte (4) hors de la trajectoire de la carte.

2. Lecteur de cartes selon la revendication 1, **caractérisé en ce que** le bras déployable (9) est formé par le premier bras d'un levier (7) à deux bras, dont le second bras (16) est couplé mobile en rotation à la butée de carte (4).

3. Lecteur de cartes selon la revendication 2, **caractérisé en ce que** le second bras (16) du levier (7) à deux bras est articulé sur la butée de carte (4) à distance radiale de son axe de rotation (6).

4. Lecteur de cartes selon l'une des revendications précédentes, **caractérisé en ce que** la butée de carte (4) est réalisée sous forme d'un goujon (12) avec un évidement (13) prévu dans le plan de la carte.

5. Lecteur de cartes selon la revendication 4, **caractérisé en ce que** le goujon (12) est réalisé de forme arrondie, en particulier circulaire, et l'évidement (13) est réalisé en forme de segment, en particulier en forme de segment de cercle ou de demi-cercle.

6. Lecteur de cartes selon l'une des revendications précédentes, **caractérisé en ce que** le bras déployable (9) comprend une pente d'introduction (18) qui s'étend à l'oblique vers le milieu de la trajectoire de la carte, dans et/ou à l'opposé de la direction d'introduction de la carte (3).

7. Lecteur de cartes selon l'une des revendications précédentes, **caractérisé en ce que** le bras déployable (9) s'engage avec un doigt (10) dans la trajectoire de la carte.

8. Lecteur de cartes selon l'une des revendications précédentes, **caractérisé en ce que** la butée de carte (4) comprend une arête de séparation (31) sur son côté qui rentre dans la trajectoire de la carte.

9. Lecteur de cartes selon l'une des revendications précédentes, **caractérisé en ce que** le bras déployable (9) est précontraint dans sa position de pivotement qui s'engage dans la trajectoire de la carte, par un ressort de traction (11) qui attaque à l'autre extrémité le boîtier (5) du lecteur de carte (1).
